# EUROPÄISCHE PATENTSCHRIFT

(11) **EP 1 332 974 B1**
(45) Veröffentlichungstag und Bekanntmachung des Hinweises auf die Patenterteilung: **21.06.2006**
(21) Anmeldenummer: 03000192.9
(22) Anmeldetag: 07.01.2003
(51) Int. Cl.: B65D 19/42, B65G 17/00

(54) **Palette zum Transport von Gütern auf einem Förderband**
Pallet for the transport of goods on a conveyor belt
Palette pour le transport d'articles sur un tapis roulant

(30) Priorität: 16.01.2002 DE 10201841
(43) Veröffentlichungstag der Anmeldung: 06.08.2003
(73) Patentinhaber: MiniTec Maschinenbau GmbH & Co. KG, 66914 Waldmohr (DE)
(72) Erfinder: Müller, Peter, 66280 Sulzbach (DE)
(74) Vertreter: Klein, Friedrich

(56) Entgegenhaltungen:
- DE-A- 19 540 922
- JP-A- 62 083 923
- US-A- 5 222 587
- US-A- 5 372 240
- US-A- 6 102 194

## Beschreibung

Die Erfindung betrifft eine Palette zum Transport von Gütern auf einem angetriebenen Transportband oder dergleichen, wobei die Palette mit einer Aufnahmefläche zur Aufnahme der Güter versehen ist, des weiteren eine Auflagefläche aufweist, die zur flächigen Auflage der Palette auf dem Transportband oderdergleichen vorgesehen ist, wobei durch eine Haftreibung zwischen der Palette und dem Transportband eine Transportbewegung der Palette erreichbar ist und die Palette betätigbare Schaltmittel zur Veränderung ihrer Relativlage zum Transportband aufweist.

In vielen Bereichen der Technik werden Förder- und Transportsysteme eingesetzt, um Güter zu transportieren. Ein Typ von Förder- und Transportsystemen weist hierzu ein oder mehrere endlose Förder- bzw. Transportbänder (auch Fördergurte genannt) auf, die beispielsweise durch Reibräder antreibbar sind. Auf dem Transportband sind Paletten angeordnet, die wiederum Güter tragen. Die Paletten liegen mit ihrer Auflagefläche auf dem längsbewegten Transportband flächig auf und werden durch Reibschluß mit dem Transportband bei dessen Bewegung mitgenommen. Solche Transportsysteme werden unter anderem auch im Schwerlastbereich eingesetzt, für den die vorliegende Erfindung somit besondere Bedeutung hat.

Bei vorbekannten Transportsystemen entstehen dann Probleme, wenn die Bewegung der Paletten trotz weiterlaufendem Transportband gestoppt werden soll. Zum einen muß jede der Paletten gegen den Reibschluß mit dem Transportband angehalten werden, was vergleichsweise hohe Kräfte erfordert und zudem zu schnellem Verschleiß des Transportbandes führt. Zum anderen läuft die jeweils nachfolgende Palette auf die jeweils vordere, bereits angehaltene Palette auf. Die hierdurch entstehenden Kräfte auf die vorderste bzw. vorderen Paletten erhöhen die vorstehend genannten Probleme immens. Es ist deshalb üblich, die Mittel zum Stoppen der Paletten sehr massiv auszubilden, um die hierbei entstehenden Kräfte aufnehmen zu können. Eine Minderung der hohen Verschleißbelastung des Transportbandes wird hiermit jedoch nicht erreicht.

Die US-A-6102194 zeigt eine Vorrichtung zum Transport von Güter aufnehmenden Paletten, die an ihrer Unterseite mit zwei jeweils einen halbkreisförmigen Querschnitt aufweisenden Ausnehmungen versehen sind und zur Aufnahme von zwei synchron zueinander angetriebenen Rundriemen dienen, wobei zwischen den Rundriemen und den als Auflageflächen für diese dienenden bogenförmigen Begrenzungsflächen der Ausnehmungen ein die Paletten bewegender Kraftschluß besteht.
Um ein Anhalten und damit eine Staubildung der Paletten zu ermöglichen, ist im Frontbereich einer jeden Palette ein Auflaufteil vorgesehen, während im Endbereich einer jeden Palette eine Auflauffläche vorgesehen ist, die an einem Heckpuffer ausgebildet ist. Der mit der jeweiligen Palette fest verbundene Heckpuffer dient gleichzeitig als Träger für zwei jeweils eine Hohlkehle aufweisende Spurräder, die mit den Rundriemen zusammenwirken.
Da die Rundriemen innerhalb den zu ihnen komplementären Ausnehmungen an der Unterseite der Paletten verlaufen, sind die Paletten aufgrund des Formschlusses zwischen den Rundriemen und ihren Ausnehmungen während ihrer Transportbwegung seitengeführt.
Zum Anhalten der Paletten läuft das Auflaufteil der ersten anzuhaltenden Palette auf die Auflauffläche eines in ihre Bewegungsbahn bringbaren Anschlages auf. Hierdurch wird die Palette von ihrer horizontalen Transportlage um die Abstützpunkte der Spurräder in eine schräge Stillsetzlage geschwenkt, sodaß die Rundriemen außer Eingriff von den zu ihnen komplementären Ausnehmungen der Paletten gelangen. Der gleiche Vorgang vollzieht sich beim Auflaufen des Auflaufteils der Palette auf die Auflauffläche einer voranstehenden Palette.
Da auf diese Weise aufeinanderfolgend sämtliche Paletten von ihrer horizontalen Transportlage in die schräge Stillsetzlage gebracht werden, wird die Antriebsverbindung zwischen den Rundriemen und den Paletten vollends aufgehoben, wobei jedoch die Spurräder in Eingriff mit den sich weiterbewegenden Rundriemen bleiben und auf diesen abrollen.
Hierdurch kann zwar der Verschleiß zwischen den Paletten und den Rundriemen minimiert bzw weitestgehend eliminiert werden, jedoch erfordert diese Lösung eine seitliche Führung der Paletten während ihres Stillstandes, die durch den Formschluß zwischen den Rundriemen und den Spurrädern erreicht wird.

Der Erfindung liegt daher die Aufgabe zugrunde, eine Möglichkeit zu schaffen, bei der einerseits die für ein Stoppen von auf den angetriebenen Transportbändern angeordneten Paletten erforderlichen Kräfte und die damit verbundenen Nachteile reduziert sind, die andererseits aber auch ohne Inanspruchnahme zusätzlicher Führungsmittel Gewähr dafür bietet, daß die Paletten während der Unterbrechung ihrer Transportbewegung keine seitlich gerichtete Bewegungen ausführen.

Diese Aufgabe wird bei einer Vorrichtung der eingangs beschriebenen Art dadurch gelöst, daß die Palette Schaltmittel aufweist, die mit aus der Auflagefläche (2) der Palette in Richtung auf das Transportband bewegbaren Rollreibungsmitteln derart in Wirkverbindung bringbar sind, daß die Haftreibung zwischen der Palette und dem Transportband teilweise in Rollreibung wechselt.

Dadurch daß an der Unterseite der Palette aus dieser hervortretende Rollreibungsmittel vorgesehen sind, die sich unter der Last der Palette auf dem Transportband abrollen, der Reibungsschluß zwischen der Palette und dem Transportband teilweise erhalten bleibt kann auf konstruktiv sehr einfache Weise verhindert werden, daß die Palette unkontrolliert Bewegungen ausführt, insbesondere entgegen oder quer zur Richtung des Transportbandes. Aufgrund einer teilweisen Entlastung des Transportbandes von der Gewichtskraft der Palette kann auch die Reibkraft ungefähr im gleichen Verhältnis reduziert werden. Durch die in einem eingeschränkten Maß weiterhin vorhandene Reibkraft liegt die Palette mit einer vorbestimmten Kraft gegen das Stoppmittel des Transportbandes an.

In einer bevorzugten Ausführungsform können die betätigbaren Mittel zum Anheben der Auflagefläche drehbar gelagerte Rollen aufweisen. Diese Rollen können durch eine Betätigung aus Öffnungen an einer Unterseite der Palette, vorzugsweise im Bereich der Auflagefläche, austreten. Eine konstruktiv besonders einfache Ausgestaltung kann vorsehen, daß die Rollen durch Kugellager gebildet werden.

Besondere Vorteile können erzielt werden, wenn sämtliche Paletten, die beim Stoppen einer Palettenreihe aufeinander auflaufen, betätigbare Schaltmittel aufweisen. Bei zumindest einer dieser Paletten, vorzugsweise bei der in Transportrichtung hinteren Palette, sollte durch stirnseitigen Kontakt der zwei Paletten deren Schaltmittel betätigt werden. Die mit den Schaltmitteln in Wirkverbindung stehenden Rollreibungsmittel treten dann aus der Auflagefläche teilweise aus und heben die Auflagefläche zumindest geringfügig an. Insbesondere aus diesem Grund kann vorgesehen sein, daß jede dieser Paletten mehrere betätigbare Schaltmittel aufweist, wobei an jeder Stirnseite der Paletten zumindest ein Schaltmittel angeordnet sein sollte. Ein weiteres, im Bereich einer Unterseite der Palette angeordnetes Schaltmittel jeder Palette kann dazu vorgesehen von einem transportbandseitigen Betätigungsmittel ausgelöst zu werden. Insbesondere bei der in Transportrichtung ersten anzuhaltenden Palette, die nicht durch Kontakt mit einer anderen Palette gestoppt werden kann, kann das Betätigungsmittel zum Anhalten der Palette genutzt werden. Die nachfolgenden Paletten können dann durch Kontakt mit der jeweils vor ihr angeordneten Palette gestoppt und ihre Rollreibungsmittel auf das Transportband ausgefahren werden.

Weitere bevorzugte Ausgestaltungen der Erfindung ergeben sich aus den Ansprüchen und der Zeichnung.

Die Erfindung wird anhand eines in den Figuren rein schematisch dargestellten Ausführungsbeispiels näher erläutert, es zeigen:
- Fig. 1a: einen Abschnitt eines Transportbandes mit einer darauf in Transportstellung angeordneten erfindungsgemäßen Palette in einer geschnittenen Seitenansicht;
- Fig. 1b: die Palette von Fig. 1a in einer Freischaltestellung;
- Fig. 2: eine perspektivische Ansicht der Palette aus Fig. 1a von schräg unten;
- Fig. 3: eine Explosionsdarstellung von Teilen einer erfindungsgemäßen Palette;
- Fig. 4: eine Ansicht einer Unterseite einer erfindungsgemäßen Palette;

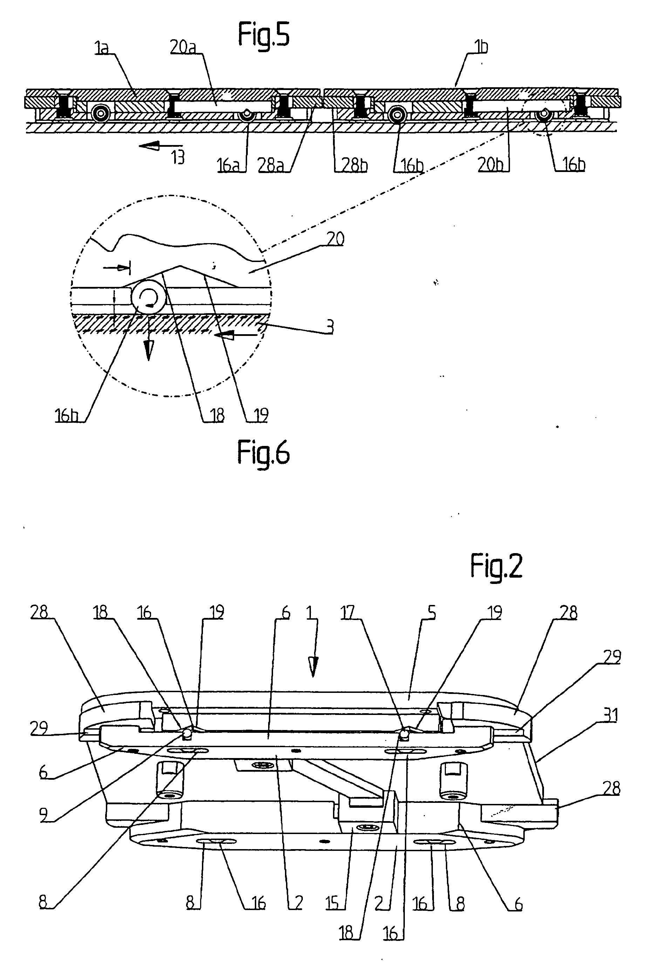

- Fig. 5: eine Ansicht gemäß Fig. 1b mit zwei aufeinander aufgelaufenen Paletten eines erfindungsgemäßen Palettensystems;
- Fig. 6: eine Detailansicht des Bereiches A aus Fig. 5.

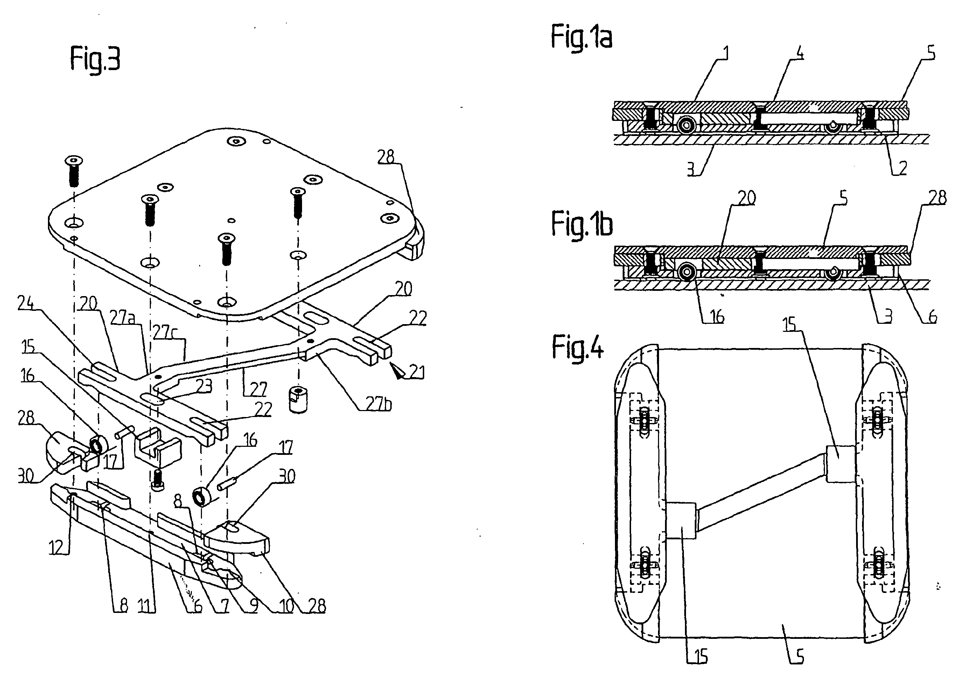

In Fig. 1 ist eine erfindungsgemäße Schwerlast-Palette 1 gezeigt, die mit einer an der Unterseite der Palette 1 angeordneten Auflagefläche 2 auf einem Transportband 3 aufliegt. Die Palette 1 ist zum Transport von nicht näher dargestellten Gütern von einem Gewicht bis zu 30 kg vorgesehen. Die Güter können hierzu auf einer im wesentlichen ebenen Aufnahmefläche 4 auf der Oberseite einer Grundplatte 5 der Palette 1 angeordnet werden. Im gezeigten Ausführungsbeispiel hat die Aufnahmefläche 4 die Maße ca 20cm x 20 cm. Eine Transportbewegung der Palette 1 wird durch einen Reibschluß zwischen der Palette 1 und dem in Richtung des Pfeils 13 angetriebenen Transportband 3 erzeugt.

Wie aus Fig. 2 und Fig. 3 hervorgeht, weist die Palette 1 an den beiden Längsseiten ihrer Unterseite zwei Gleitleisten 6 auf, an denen die im wesentlichen ebene Auflagefläche 2 ausgebildet ist. Auf der der Grundplatte 5 der Palette 1 zugewandten Seite jeder Gleitleiste 6 ist jeweils eine an ihren Stirnseiten offene Nut 7 ausgebildet. Im Bereich ihres Endes ist in jeder Nut 7 eine zur Auflagefläche 2 hin offene und in Längsrichtung der Gleitleiste 6 ausgerichtete langlochartige Ausnehmung 8 vorgesehen. Jede langlochartige Ausnehmung 8 hat zudem beidseitig jeweils eine von oben in den Längsschenkel eingebrachte Quernut 9. Schließlich weist jede Gleitleiste 6 drei gleichmäßig über die Länge der Gleitleiste 6 verteilte durchgehende Befestigungsausnehmungen 10, 11, 12 auf. Die beiden Gleitleisten 6 haben an unterschiedlichen Enden jeweils an Innenseiten der Gleitleisten angeordnete und über die Nut 8 ragende Brückenteile 15, die sich jeweils quer in Richtung zur gegenüberliegenden anderen Gleitleiste 6 erstrecken (vgl. auch Fig. 4).

In jede langlochartige Ausnehmung 8 ist eine Rolle 16 eingesetzt, deren Achse 17 in den Quernuten 9 gelagert ist. Eine Höhe jeder Quernut 9 ist dabei größer als der Durchmesser der Achsen 17 der Rollen 16. Von oben wird jede Rolle 16 von einer von zwei schrägen Flächen 18, 19 gebildeten prismatischen Ausnehmung eines Längsschenkels 20 eingefaßt. Die beiden auf jeder Längsseite der Palette 1 vorgesehenen Längsschenkel 20 gehören zu einem Schaltelement 21. Zu seiner Befestigung weist das Schaltelement 21 in seinen beiden Längsschenkeln 20 ebenfalls jeweils drei langlochartige Ausnehmungen 22, 23, 24 auf. Die beiden Längsschenkel 20, sind über einen zweifach abgewinkelten Querschenkel 27 miteinander verbunden. Der Querschenkel 27 hat aufgrund der Abwinklungen zwei zur Transportrichtung quer verlaufende kurze Querteile 27a, 27b und einen diese miteinander verbindenden Schrägteil 27c. Jedes Brückenteil 15 der beiden Gleitleisten 6 liegt gegen die Querteile 27a, 27b des Querschenkels an.

Vor den Längsschenkeln 20 ist über jeder Gleitleiste 6 im Bereich deren Enden jeweils eine Prallecke 28 angeordnet. An ihrer Unterseite sind die Prallecken mit einer Führungskante 29 versehen (Fig. 2), mit der jede Prallecke 28 an einer Innenseite ihrer Gleitleiste 6 anliegt und von dieser geführt wird. Zu ihrer beweglichen Befestigung weist auch jede Prallecke 28 ein Langloch 30 aus. Beide Prallecken 28 einer jeden Stirnseite 31, 32 der Palette stehen über die Grundplatte 5 über und sind in einer Grundstellung jeweils mit Abstand zu den Stirnseiten jedes Längsschenkels 20 angeordnet.

Wie insbesondere aus der Explosionsdarstellung von Fig. 3 hervorgeht, sind im montierten Zustand der Palette durch jeweils drei Durchgangsbohrungen 33 der Grundplatte 5 jeweils eine Schraube 34a, 34b, 34c durchgeführt. Die zwei äußeren Schrauben 34a, 34c jeder Längsseite der Palette befinden sich auch in den Langlöchern 30 der Prallecken 28. Von der Auflagefläche 2 aus sind durch die Befestigungsausnehmungen 10, 11, 12 der Gleitleisten 6 Gewindehülsen 35 eingeführt, in die die Schrauben 34a, 34b, 34c eingedreht sind. Hierdurch sind die Grundplatte und die beiden Gleitleisten gegeneinander fixiert. Die Prallecken 28 sind hingegen zwischen den beiden letztgenannten Bauteilen in Längsrichtung, d.h. parallel zur vorgesehenen Transportrichtung, längsverschiebbar. Die dritte, mittlere Schraube 34b ist ebenfalls durch die Langlochausnehmung des entsprechenden Längsschenkels 20 durchgeführt und in eine der Gewindehülse 35 eingeschraubt, die in die Gleitleiste 6 eingesteckt ist. Damit sind auch die Längsschenkel 20 gegenüber der Grundplatte 5 und den Gleitleisten 6 längsverschieblich.

Im Transportbetrieb liegt die Palette 1 mit der Auflagefläche 2 der Gleitleisten 6 auf dem Transportband auf. Die Rollen 16 befinden sich hierbei im wesentlichen vollständig innerhalb der Palette, d.h. innerhalb des jeweils von der Ausnehmung 8 der Gleitleiste 6 und der prismatischen Ausnehmung der Flächen 18, 19 gebildeten Raumes.

Es kann vorgesehen sein, daß die Palette an einer vorgegebenen Stelle ihres Transportweges gestoppt werden soll. Hierzu wird die Palette durch einen nicht näher dargestellten transportbandseitigem Stopper angehalten, gegen den die Palette aufläuft. Ein solcher Stopper kann beispielsweise zwischen zwei Gurten eines an sich bekannten Transportbandes in eine Stopposition eingefahren werden. Die in Fig. 1 und Fig. 2 gezeigte Palette stößt mit dem in Transportrichtung vorderen Querteil 27, 27b bzw. einem Brückenteil 15 gegen den Stopper an. Damit wird das Schaltelement 21 insgesamt gestoppt, während zwischen den Gleitleisten 6 und dem Transportband 3 zunächst weiterhin ein Haftreibungsschluß besteht.

Die in Bezug auf Relativbewegungen miteinander verbundenen Gleitleisten 6 und die Grundplatte 5 bewegen sich somit in Transportrichtung (Pfeil 13) zunächst weiter. Die in den Quernuten 9 der Gleitleisten 6 angeordneten Achsen 17 der Rollen 16 werden hierdurch ebenfalls mitgenommen. Eine der sich in Transportrichtung gegenüber der Rolle 16 relativ bewegenden schrägen Flächen 18, 19 der prismatischen Ausnehmung drückt nun die Rolle 16 in Richtung auf das Transportband. Die Rolle tritt dadurch an der Unterseite der Gleitleiste 6 ein Stück weit aus der Gleitleiste aus und kommt mit dem Transportband 3 in Kontakt. Die Palette, d.h. insbesondere deren Gleitleisten 6 werden dadurch in Richtung orthogonal zur Transportrichtung gegenüber dem Transportband zumindest geringfügig angehoben. Diese Situation ist in Fig. 1 b dargestellt.

Da die beiden Längsschenkel 20 über den Querschenkel 27 miteinander verbunden sind, drücken die beiden Längsschenkel 20 im wesentlichen gleichzeitig alle vier Rollen 16 in gleichem Maße aus ihren Ausnehmungen 8 heraus (vgl. auch Fig.2). Die Größe des Austritts kann durch die Geometrie der prismatischen Ausnehmung, der Rolle 16 und der Höhe der Ausnehmung 8 der Gleitleiste 6 vorbestimmt werden.

Erfindungsgemäß ist es hierbei bevorzugt, wenn die Rollen 16 nur soweit aus den Gleitleisten 6 austreten, daß der Kontakt der Gleitleisten 6 mit dem Förder- oder Transportband 3 nicht vollständig aufgehoben ist. Hierdurch wird die unmittelbar nach Anschlag der Palette am Stopper vorhandene, im wesentlichen ausschließliche, Gleitreibung zwischen dem Förderband und den Gleitleisten zu einem erheblichen Anteil in Rollreibung umgewandelt. Im gezeigten Ausführungsbeispiel besteht im wesentlichen aufgrund der Größe des geringfügigen Austritts der Rollen 16 gegenüber der Auflagefläche 2 ca. 60% Roll- und noch ca. 40% Gleitreibung. Hierdurch wird die erforderliche Haltekraft am Stopper erheblich reduziert. Da wie erwähnt weiterhin auch Gleitreibung vorhanden ist, hebt die Palette nicht vollständig ab, lediglich die Staukraft am Stopper wird reduziert. Festzuhalten ist, daß die Rollen gerade so weit aus der Auflagefläche heraus treten, Prallecken 28a der ersten Palette. Die beiden Prallecken 28b der nachfolgenden Palette 1b werden dadurch entgegen der Transportrichtung 13 in Richtung auf die Längsschenkel 20b und gegen diese geschoben. Über jeweils eine der schrägen Flächen jeder prismatischen Ausnehmung werden dann die vier Rollen 16b in gleicher Weise und gleichem Maße aus den Ausnehmungen ihrer Gleitleisten gedrückt, wie dies bei der vorderen Palette 1a der Fall ist. Auch bei der hinteren Palette 1b tritt somit anstelle eines erheblichen Anteils der Gleitreibung ein entsprechender Anteil an Rollreibung ein. Das gleiche findet bei jeder nachfolgenden Palette statt, die auf die jeweils zuletzt angehaltene Palette aufläuft.

Wird der Stopper, der die vorderste der Paletten 1a bis dahin weiter angehalten hat, von seiner Stopposition zurückgefahren so gibt dieser die erste Palette 1a wieder frei. Der verbliebene Gleitreibungsanteil der Gleitleisten mit dem Förderband bewirkt, daß die Palette vom Förderband sofort wieder mitgenommen wird. Mangels einer von außen auf die Palette wirkenden Kraft, die die Rollen in ausgefahrener Position halten könnten, gelangen die Rollen wieder vollständig in die Ausnehmungen der Gleitleisten. Hierbei drücken die Rollen 16 die Längsschenkel 20 wieder in eine neutrale Position, in der die schrägen Flächen der prismatischen Ausnehmung die Rollen höchstens geringfügig belasten und zu diesen im wesentlichen mittig angeordnet sind.

## Patentansprüche

1. Palette zum Transport von Gütern auf einem angetriebenen Transportband oder dergleichen, wobei die Palette mit einer Aufnahmefläche zur Aufnahme von Gütern versehen ist und eine Auflagefläche aufweist, die zur flächigen Auflage der Palette auf dem Transportband oder dergleichen vorgesehen ist, wobei durch eine Haftreibung zwischen der Palette und dem Transportband eine Transportbewegung erreichbar ist und die Palette betätigbare Schaltmittel zur Veränderung ihrer Relativlage zum Transportband aufweist,
**dadurch gekennzeichnet, daß**
die Schaltmittel mit aus der Auflägefläche (2) der Palette (1, 1 a, 1b) in Richtung auf das Transportband bewegbaren Rollreibungsmitteln derart in Wirkverbindung bringbar sind, daß die Haftreibung zwischen der Palette und dem Transportband teilweise in Rollreibung wechselt.

2. Palette nach Anspruch 1, **dadurch gekennzeichnet, daß** die Schaltmittel ein von einer benachbarten Palette betätigbares Schaltelement umfassen, durch dessen Betätigung die Rollreibungsmittel zumindest mit einer Bewegungskomponente senkrecht zur Auflagefläche (2) beweglich sind.

3. Palette nach Anspruch 1 oder 2, **dadurch gekennzeichnet, daß** die Rollreibungsmittel drehbar gelagerte Rollen (16) umfassen.

4. Palette nach einem oder mehreren der vorhergehenden Ansprüch 1 bis 3, **dadurch gekennzeichnet, daß** die Betätigungsmittel zumindest ein im Bereich einer Stirnseite der Palette (1, 1a, 1b) verschiebbar angeordnetes Prallstück (28, 28a, 28b) aufweist.

5. Palette nach Anspruch 4, **dadurch gekennzeichnet, daß** an jeder der beiden Stirnseiten zumindest ein Prallstück (28, 28a, 28b) vorgesehen ist.

6. Palette nach den Ansprüchen 2 und 4, **gekennzeichnet durch** zumindest einen mit einer schrägen Fläche versehenen Längsschenkel (20, 20a, 20b), wobei das Prallstück bei Betätigung mit seiner Verschiebebewegung auf den Längsschenkel (20, 20a, 20b) wirkt, und die schräge Fläche (18, 19) hierdurch zumindest ein Rollreibungsmittel betätigt.

7. Palette nach einem oder beiden der vorhergehenden Ansprüche, **dadurch gekennzeichnet, daß** eine die Aufnahmefläche (4) aufweisende Grundplatte (5) mit zumindest einer die Auflagefläche (2) ganz oder teilweise aufweisenden Gleitschiene (6) fest verbunden ist, wobei der Längsschenkel (20, 20a, 20b) zwischen der Grundplatte und der Gleitschiene und relativ zu diesen beweglich angeordnet ist.

8. Palette nach Anspruch 1, **dadurch gekennzeichnet, daß** die betätigbaren Schaltmittel ein an der Unterseite der Palette angeordnetes Schaltelement (21) aufweisen.

9. Palette nach den Ansprüchen 2 und 8, **dadurch gekennzeichnet, daß** das Schaltelement (21) mit einem Längsschenkel (20) wirkverbindbar ist, wobei der Längsschenkel mit einer schrägen Fläche (18, 19) versehen ist, durch die zumindest eines der Rollreibungsmittel betätigbar ist.

10. Palettensystem umfassend mehrere Paletten, die zum Transport von Gütern und zur Auflage auf einem angetriebenen Transportband oder dergleichen vorgesehen sind, **gekennzeichnet durch** mehrere Paletten nach einem der vorgehenden Ansprüche, wobei die Paletten so aufeinander abgestimmt sind, daß aufgrund von stirnseitigem Kontakt zwischen zwei Paletten zumindest das Schaltmittel einer Palette betätigt wird und die bei Betätigung der Schaltmittel mit diesen in Wirkverbindung stehende Rollreibungsmittel aus der Auflagefläche teilweise hervortreten.

11. Förder- und Transportsystem, umfassend ein in einer Transportrichtung antreibbares Transportband, **gekennzeichnet durch** ein Palettensystem nach Anspruch 10.

12. Förder- und Transportsystem nach Anspruch 11, **gekennzeichnet durch** ein in Transportrichtung fixiertes Stoppelement des Transportbandes, das von einer neutralen Endlage in eine Stopendlage und vice versa bewegbar ist, wobei in der Stopendlage das Stopelement gegen ein Schaltelement einer Palette in Anlage bringbar ist.

## Claims

1. Pallet for the transportation of articles on a driven conveyor belt or the like, the pallet being provided with a receiving surface for the accommodation of articles and having a bearing surface, which is provided for supporting the pallet on the conveyor belt or the like in a planar manner, whereby, through an adhesive friction between the pallet and the conveyor belt, a transportation movement is achievable, and the pallet has actuatable switching means for altering its position relative to the conveyor belt, **characterised in that** the switching means can be brought into operative connection with rolling friction means, which are displaceable from the bearing surface (2) of the pallet (1, 1a, 1b) in a direction towards the conveyor belt in such a manner that the adhesive friction between the pallet and the conveyor belt changes partially into rolling friction.

2. Pallet according to claim 1, **characterised in that** the switching means include a switching element, which is actuatable by an adjacent pallet, the rolling friction means being displaceable at least with one component of movement perpendicular to the bearing surface (2) through the actuation of said element.

3. Pallet according to claim 1 or 2, **characterised in that** the rolling friction means include rotatably mounted rollers (16).

4. Pallet according to one or more of the preceding claims 1 to 3, **characterised in that** the actuating means have at least one deflecting piece (28, 28a, 28b), which is displaceably disposed in the region of an end face of the pallet (1, 1a, 1b).

5. Pallet according to claim 4, **characterised in that** at least one deflecting piece (28, 28a, 28b) is provided on each of the two end faces.

6. Pallet according to claims 2 and 4, **characterised by** at least one longitudinal portion (20, 20a, 20b), which is provided with an inclined face, the deflecting piece, when actuated, acting with its displacement movement upon the longitudinal portion (20, 20a, 20b), and the inclined face (18, 19) hereby actuating at least one rolling friction means.

7. Pallet according to one or both of the preceding claims, **characterised in that** a base plate (5), which contains the receiving face (4), is securedly connected to at least one slide rail (6), which wholly or partially contains the bearing face (2), the longitudinal portion (20, 20a, 20b) being disposed so as to be displaceable between the base plate and the slide rail and relative thereto.

8. Pallet according to claim 1, **characterised in that** the actuatable switching means have a switching element (21), which is disposed on the underside of the pallet.

9. Pallet according to claims 2 and 8, **characterised in that** the switching element (21) is operatively connectable to a longitudinal portion (20), the longitudinal portion being provided with an inclined face (18, 19), through which at least one of the rolling friction means is actuatable.

10. Pallet system including a plurality of pallets, which are provided for the transportation of articles and for support on a driven conveyor belt or the like, **characterised by** a plurality of pallets according to one of the preceding claims, the pallets being so adapted to one another that, because of end-face contact between two pallets, at least the switching means of one pallet is actuated and the rolling friction means, which are operatively connected to the switching means upon actuation of said switching means, protrude partially from the bearing face.

11. Conveyor and transportation system, including a conveyor belt which is drivable in a transportation direction, **characterised by** a pallet system according to claim 10.

12. Conveyor and transportation system according to claim 11, **characterised by** a stop element of the conveyor belt, which element is fixed in the direction of transportation and is displaceable from a neutral end position into an end stop position and vice versa, the stop element being able to be brought into abutment against a switching element of a pallet in the end stop position.

## Revendications

1. Palette pour le transport d'articles sur un tapis roulant commandé ou similaires, la palette étant munie d'une surface de réception pour recevoir des articles et présentant une surface de support qui est prévue pour le support plan de la palette sur le tapis roulant ou similaires, un frottement par adhérence entre la palette et le tapis roulant permettant d'obtenir un déplacement de transport, et la palette présentant des moyens de commutation actionnables pour modifier sa position relative par rapport au tapis roulant,
**caractérisée en ce que**
les moyens de commutation peuvent être amenés en relation active par des moyens de frottement par roulement, pouvant être déplacés à partir de la surface d'appui (2) de la palette (1, 1a, 1b) en direction du tapis roulant, de telle sorte que le frottement par adhérence entre la palette et le tapis roulant devient en partie un frottement par roulement.

2. Palette selon la revendication 1, **caractérisée en ce que** les moyens de commutation comprennent un élément de commutation actionnable à partir d'une palette voisine, par l'actionnement desquels les moyens de frottement par roulement peuvent être déplacés au moins avec une composante de déplacement perpendiculairement à la surface de support (2).

3. Palette selon la revendication 1 ou 2, **caractérisée en ce que** les moyens de frottement par roulement comprennent des rouleaux pivotants (16).

4. Palette selon l'une quelconque ou plusieurs des revendications précédentes 1 à 3, **caractérisée en ce que** les moyens d'actionnement présentent un corps de rebondissement (28, 28a, 28b) disposé de façon mobile au moins au niveau d'une face frontale de la palette (1, 1a, 1b) .

5. Palette selon la revendication 4, **caractérisée en ce que** sur chacune des deux faces frontales, au moins un corps de rebondissement (28, 28a, 28b) est prévu.

6. Palette selon les revendications 2 et 4, **caractérisée par** au moins une branche longitudinale (20, 20a, 20b) munie d'une surface inclinée, le corps de rebondissement, en cas d'actionnement, agissant avec son déplacement de translation sur la branche longitudinale (20, 20a, 20b) et la surface inclinée (18, 19) actionnant ainsi au moins un moyen de frottement par roulement.

7. Palette selon l'une quelconque des ou les deux revendications précédentes, **caractérisée en ce qu'**une plaque de base (5) présentant la surface de réception (4) est reliée solidement à au moins une glissière (8) présentant la surface de support (2) en entier ou en partie, la branche longitudinale (20, 20a, 20b) étant disposée entre la plaque de base et la glissière et de façon mobile par rapport à celles-ci.

8. Palette selon la revendication 1, **caractérisée en ce que** les moyens de commutation actionnables présentent un élément de commutation (21) disposé sur la face inférieure de la palette.

9. Palette selon les revendications 2 et 8, **caractérisée en ce que** l'élément de commutation (21) peut être mis en relation active avec une branche longitudinale (20), la branche longitudinale étant munie d'une surface inclinée (18, 19) permettant d'actionner au moins l'un des moyens de frottement par roulement.

10. Système de palettes comprenant plusieurs palettes prévues pour le transport d'articles et le support sur un tapis roulant commandé ou similaires, **caractérisé par** plusieurs palettes selon l'une quelconque des revendications précédentes, dans lequel les palettes sont adaptées les unes aux autres de telle sorte qu'en raison d'un contact frontal entre deux palettes, au moins le moyen de commutation d'une palette est actionné, et les moyens de frottement par roulement, en relation active avec les moyens de commutation lorsque ceux-ci sont actionnés, font partiellement saillie à partir de la surface de support.

11. Système convoyeur ou de transport, comprenant un tapis roulant pouvant être commandé dans une direction de transport, **caractérisé par** un système de palettes selon la revendication 10.

12. Système convoyeur ou de transport selon la revendication 11, **caractérisé par** un élément d'arrêt, fixé dans la direction de transport, du tapis roulant, l'élément pouvant être déplacé d'une position finale neutre à une position finale d'arrêt et vice versa, dans lequel, dans la position finale d'arrêt, l'élément d'arrêt peut être amené en butée contre un élément de commutation sur une palette.
